# EUROPEAN PATENT APPLICATION

(11) **EP 1 801 611 A1**
(43) Date of publication of application: **27.06.2007**
(21) Application number: 05077970.1
(22) Date of filing: 23.12.2005
(51) Int. Cl.: G01S 7/41

(54) **Method for extracting a semantic parameter, computer system and computer program product**

(71) Applicant: Nederlandse Organisatie voor Toegepast-Natuurwetenschappelijk Onderzoek TNO, 2628 VK Delft (NL)
(72) Inventor: Van Dorp, Philip, 2645 KL Delfgauw (NL); Groen, Franciscus Corstiaan Arnold, 2287 BD Rijswijk (NL)
(74) Representative: Winckels, Johannes Hubertus F.

(57) **Abstract**

The invention relates to a method for extracting a semantic parameter of an object from a radar signal. The method comprises the step of retrieving time dependent velocity data of the object from the radar signal. Further, the method comprises the steps of determining an envelope of the time dependent velocity data of the object and processing the envelope for obtaining a semantic parameter of the object.

## Description

The invention relates to a method for extracting a semantic parameter of an object from a radar signal, comprising a step of retrieving time dependent velocity data of the object from the radar signal.

Radar signals serve as a useful sensing technique for observing objects, such as persons, animals and/or vehicles. By analyzing radar signals such objects can also be observed in situations where they are not or less visible for the human eye, e.g. behind walls or at great distances.

From the scientific paper Human walking estimation with radar, by P. van Dorp en F.C.A. Groen, IEE Proc. - Radar Sonar Navigation, Volume 150 (No. 5), pages 356-365, October 2003, a method is known to estimate a semantic parameter, such as an average torso velocity or a moving leg frequency of a walking person that is represented by the object in the radar signal. Thereto time dependent velocity data of the object from the radar signal is retrieved and analysed e.g. for extraction of an average velocity of a walking person.

It is an object of the invention to improve such a method for extracting a semantic parameter of an object from a radar signal. Thereto, the method according to the invention further comprises the step of determining an envelope of the time dependent velocity data of the object and the step of processing the envelope for obtaining a semantic parameter of the object.

By determining an envelope of the time dependent velocity data of the object, interesting information of the object can be deduced in an elegant and relatively easy way, such as a minimum and maximum velocity of the object or one or more parts of the object. Further, by processing the envelope for obtaining a semantic parameter of the object a numerical estimation of the semantic parameter can be obtained.

It is noted that determining an envelope of the time dependent velocity data of the object can e.g. be performed directly in time domain. However, an envelope can also be obtained by performing a Fourier transformation with respect to the time parameter and by processing the spectral data. A further alternative comprises performing a numerical analysis on the velocity data using the so-called principle component analysis.

In an advantageous embodiment the step of determining an envelope of the time dependent velocity data of the object comprises a step of segmentation of the velocity data of the object, so that velocity data having an amplitude that is greater than a noise level, can be clustered and separated from useless information in the velocity data. Also other methods for separating useful information from useless information in the velocity data can be applied, such as general or specific noise removal filtering.

Preferably, the step of processing the envelope for obtaining a semantic parameter of the object comprises determining a lower and/or an upper velocity bound in the velocity dependent velocity data. Thereby, semantic parameters such as a lower and/or upper velocity of the object or part of the object can be obtained. However, also other types of processing the envelope for obtaining a semantic parameter of the object can be applied, alone or in combination, such as determining a repetition frequency and/or a phase of the envelope.

The method according to the invention can e.g. be applied to an object representing a human body. In doing so, an extracted lower and/or upper velocity of the objects can be interpreted as time dependent velocities of legs and/or arms of the human body. Further, a repetition frequency and a phase of the envelope can be interpreted as a walking (or swinging) frequency and phase of a limb movement, respectively. The latter might lead to information of an actual position of the limb. Such information can be processed to determine if the human body in question is walking, biking, riding, skating, swimming, creeping, falling, standing up, etc.

It is noted however, that the object might not only represent human bodies, but also other types of objects, such as animals or vehicles.

By using the one or more extracted semantic parameters as input parameters of a human body model, the radar signal can advantageously be visualized in such a way that a human observer can easily interpret the data.

Further, the invention relates to a computer system to perform the method of claim 1.

Additionally, the invention relates to a computer program product for extracting a semantic parameter of an object from a radar signal, which computer program product comprises instructions for causing a processor to perform the steps of retrieving time dependent velocity data of the object from the radar signal; determining an envelope of the time dependent velocity data of the object and processing the envelope for obtaining a semantic parameter of the object.

Other advantageous embodiments according to the invention are described in the following claims.

By way of example only, embodiments of the present invention will now be described with reference to the accompanying figures in which
Fig. 1 shows a velocity-time data of a radar signal;
Fig. 2 shows an envelope of the velocity data of Fig. 1;
Fig. 3 shows a graph of velocity data at a fixed time instant;
Fig. 4 shows an amplitude distribution of velocity data at a fixed time instant;
Fig. 5 shows hat functions with varying width; and
Fig. 6 shows a human body model.

The figures are merely schematic views of preferred embodiments according to the invention. In the figures, the same reference numbers refer to equal or corresponding parts.

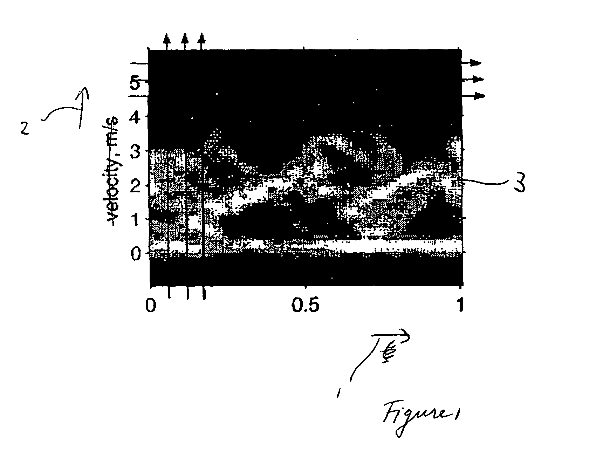

Figure 1 shows velocity-time data of a radar signal. The radar signal is generated by a radar scanning a region. The radar is e.g. of the frequency modulated continuous wave (FMCW) type and generates information with respect to object range information and object velocity components. From the radar signal, time dependent velocity data of the object is retrieved.

Advantageously, the step of retrieving the time dependent velocity data of the object comprises selecting an object from the range information data, so that data with respect to a particular object can be analyzed.

Preferably, the step of retrieving the time dependent velocity data of the object comprises filtering range information of the object from the radar signal, thereby reducing the amount of radar signal data to be analyzed. In Figure 1, time dependent velocity data, also called the spectrum of the object from the radar signal, is shown. The horizontal axis 1 denotes the time parameter, while the vertical axis 2 denotes the velocity. The amplitude 3, or power, of the radar signal is depicted in a grey scale.

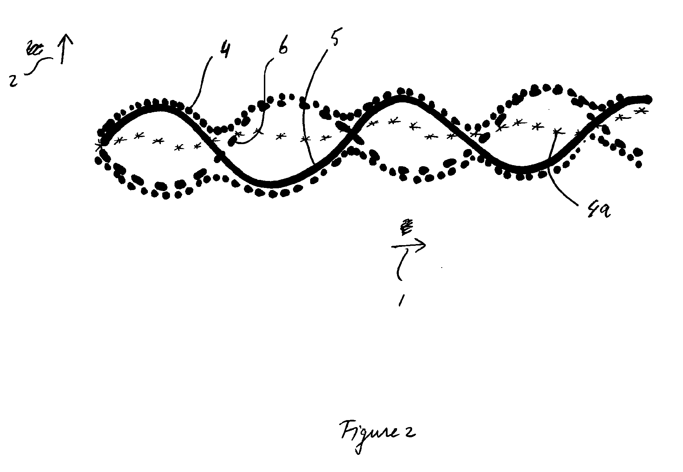

The method according to the invention further comprises determining an envelope of the time dependent velocity data of the object. Such an envelope is in simplified form shown in Figure 2 as a dotted line 4. Further, the envelope is processed for obtaining a semantic parameter of the object.

The data shown in Figures 1 and 2 are based upon a radar signal from an object that represents a human body, in particular a walking person. As parts of the human body, such as the torso, limbs, etc., in general have different instant velocities, also different velocity components are caused in the radar signal. As a consequence, the time dependent velocity data of the walking person contains information with respect to an average velocity of the torso of the body, as well information with respect to limbs, such as legs and/or arms. The time dependent velocities of the legs are depicted in Figure 2 as a solid line 5 and as a discontinuous line 6, representing a left and right leg, respectively.

Further, a time-dependent average velocity 4a is calculated from the velocity data of the object. The average velocity is interpreted as the average speed of the torso. As can be seen from Figure 2, the average velocity, denoted by a line with multiple asterixes, comprises a frequency component at a frequency that is approximately twice the frequency of the limbs. This double frequency represents a waddling frequency of the hips.

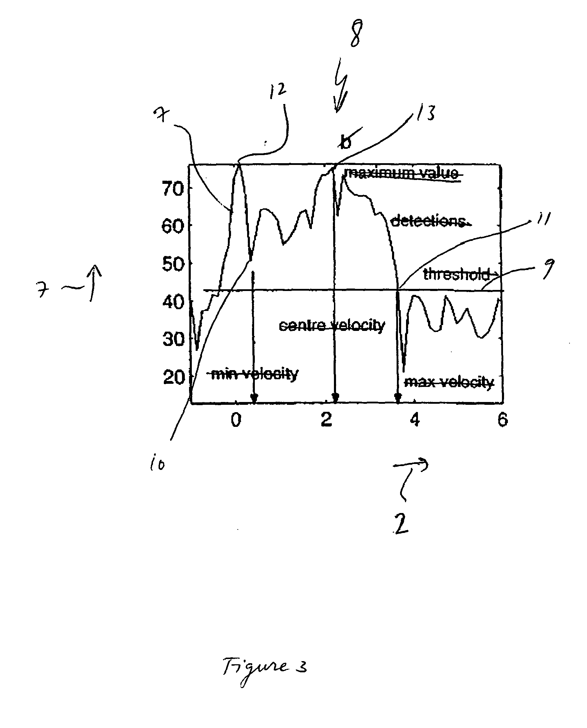

In the following, one embodiment of the step of determining the envelope of the time dependent velocity data of the objects is explained in more detail. Figure 3 shows a graph 8 of velocity data at a fixed instant, also called a time slice from the velocity spectrum from Figure 1. Again, the horizontal axis denotes the velocity 2, while the vertical axis denotes the amplitude 7, or power, of the velocity data. The method comprises a segmentation step of the velocity data of the object to cluster useful information of the velocity data. All components lower than a predetermined value, the threshold 9, are ignored. Further, artificial components, such as zero speed clutter 12 can be removed. The components higher than the threshold 9 are considered as useful information with respect to velocity information of the object. In this way a lower velocity bound 10 and an upper velocity bound 11 of the velocity data are determined. By collecting the lower and upper velocity bounds per time instant, the envelope is obtained. It is noted that the envelope could be further processed, e.g. by smoothing the time dependent envelope. A centre velocity is estimated by determining the velocity with the highest amplitude 13. By collecting the centre velocities per time instant, an average velocity is estimated.

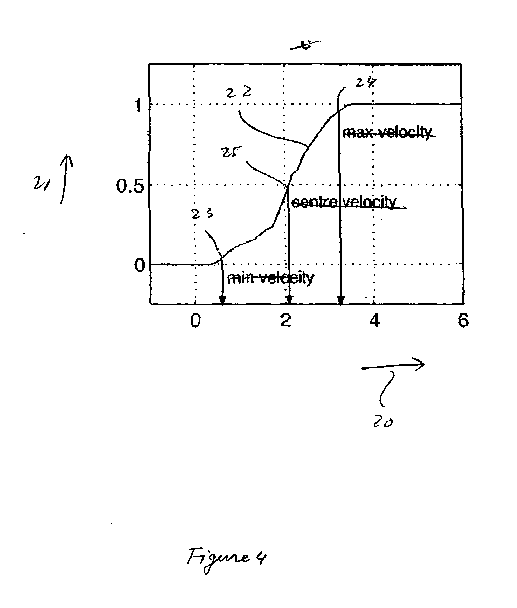

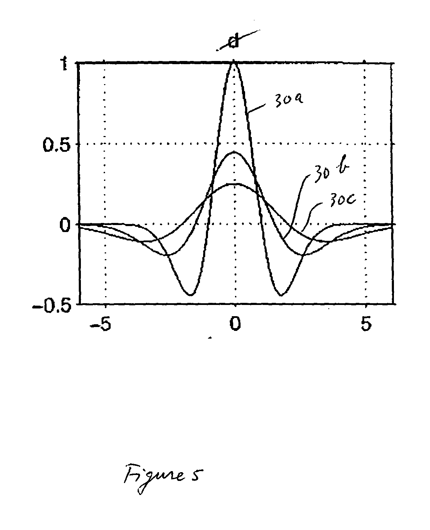

In Figures 4 and 5 other methods according to the invention for determining a lower velocity bound, an upper velocity bound and/or an average velocity at a particular time instant are illustrated.

According to a second method an amplitude distribution 22 of the velocity data is calculated as shown in Figure 4, wherein the horizontal axis denotes the velocity 20, while the vertical axis denotes a cumulative sum 21 of the data. A lower and an upper velocity bound 23 and 24 are determined by choosing a lower and upper percentage, respectively, of the whole data set. Further, an average velocity 25 is determined at a percentage of 50%. This method is also known as the percentiles method.

According to a third method the amplitude 7 of the velocity data is mapped to a hat function with variable width. Figure 5 shows several hat functions 30a, 30b, 30c with variable width. From the hat function which in some sense maps optimal with the velocity data, see e.g. Recognizing transient low-frequency whale sounds by spectrogram correlation by D.K. Mellinger and C.H. Clark, Acoustical Society of America, Volume 107 (No. 6), pages 3518-3529, June 2000, a lower and an upper velocity bound is obtained by determining e.g. a double width distance or another distance from the centre of the hat function. Again the centre is selected as an average velocity.

The envelope is processed for obtaining semantic parameters, such as a repetition frequency representing a leg frequency, and a phase of the envelope for deduction of a leg position.

Further processing of the envelope of the time dependent velocity data of the object might lead to further semantic parameters, such as a torso frequency, a torso phase, a torso offset, as well as a leg deviation and/or a leg offset.

By assuming that the legs and the torso behave as a sinusoidal function, estimation of the frequency and phase can be improved. However, also an estimation of the leg and torso parameters can be computed without using a priori information.

In order to obtain a more accurate result, the radar signal is preprocessed, e.g. for suppressing of artificial information and noise. This might be accomplished by using e.g. a Kalman filter. Also other filters might be used, such as a Wiener filter. Also other pre-processing steps can be performed, e.g. processing steps enhancing edges of objects.

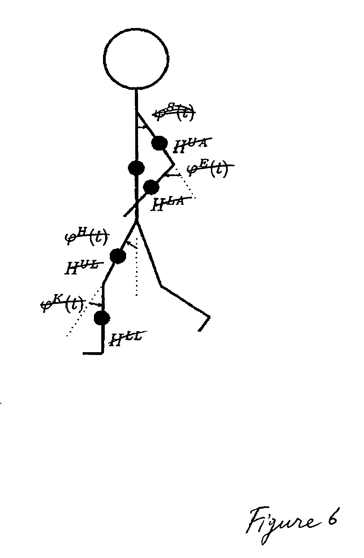

The extracted semantic parameters are employed as input parameters of a human body model. Thereby object information from the radar signal is visualized. An example of a human body model is shown in Figure 6. The position of the torso, legs and arms is determined by several input parameters. In the Boulic model some global parameters completely describe the human motion, see e.g. A global human walking model with real time kinematic personifaction, by R. Boulic, M.N. Thalmann and D. Thalmann, Visual Computing, Volume 6: pages 344-356, 1990. Optionally, some parameters such as the torso frequency and torso phase, as well as a leg frequency and a leg phase are input to the human body model for animation of a human walking model. Alternatively, only the model features being extracted from the radar data are input in a body model to obtain a personified human model, e.g. a Nancy model, see e.g. VRML Humanoid Animation Working Group, http://www.h-anim.org, 1997, wherein other model features, e.g. the position of the arms, remain static.

The invention is not restricted to the embodiments described herein. It will be understood that many variants are possible.

Instead of filtering velocity information from the radar signal, it is also possible to combine velocity data with range data and/or acceleration data to optimally employ the radar data.

As the person skilled in the art knows, different radar types can be employed and/or combined for retrieving data from objects. Such data types comprise e.g. scanning radars and/or multiple beam radars generating azimuth and/or elevation data. Further, multiple radars at different positions can be employed to obtain different data sets to be combined.

In addition, it is noted that instead of analysing time dependent velocity data of a moving object, such as a walking person, the method according to the invention might also be applied for extracting a semantic parameter of a non-moving object, such as a standing person having swinging arms. If only moving objects are of interest, information with respect to objects having a constant position can be filtered from the signal data.

Other such variants will be obvious for the person skilled in the art and are considered to lie within the scope of the invention as formulated in the following claims.

## Claims

1. A method for extracting a semantic parameter of an object from a radar signal, comprising the steps of
- retrieving time dependent velocity data of the object from the radar signal;
- determining an envelope of the time dependent velocity data of the object; and
- processing the envelope for obtaining a semantic parameter of the object.

2. A method according to claim 1, wherein the step of retrieving the time dependent velocity data of the object comprises selecting an object from range information data from the radar signal.

3. A method according to claim 1 and/or 2, wherein the step of retrieving the time dependent velocity data of the object comprises filtering range information of the object from the radar signal.

4. A method according to any of the previous claims, further comprising calculating an average velocity from the velocity data of the object.

5. A method according to any of the previous claims, wherein the step of determining an envelope of the time dependent velocity data of the object comprises a step of segmentation of the velocity data of the object.

6. A method according to any of the previous claims, wherein the step of processing the envelope for obtaining a semantic parameter of the object comprises determining a lower and/or an upper velocity bound in the time dependent velocity data.

7. A method according to any of the previous claims, wherein the step of processing the envelope for obtaining a semantic parameter of the object comprises determining a repetition frequency.

8. A method according to any of the previous claims, wherein the step of processing the envelope for obtaining a semantic parameter of the object comprises determining a phase of the envelope.

9. A method according to any of the previous claims, wherein the moving object represents a human body.

10. A method according to any of the previous claims, wherein a semantic parameter of the object is input in a human body model.

11. Computer system arranged to perform the method of claim 1.

12. Computer program product for extracting a semantic parameter of an object from a radar signal, which computer program product comprises instructions for causing a processor to perform the steps of
- retrieving time dependent velocity data of the object from the radar signal;
- determining an envelope of the time dependent velocity data of the object; and
- processing the envelope for obtaining a semantic parameter of the object.
